# EUROPEAN PATENT APPLICATION

(11) **EP 3 070 866 A1**
(43) Date of publication of application: **21.09.2016**
(21) Application number: 16160106.7
(22) Date of filing: 14.03.2016
(51) Int. Cl.: H04L 1/00, H04W 74/08, H04L 12/805

(54) **COMMUNICATION SYSTEM, COMMUNICATION APPARATUS, DATA RETRANSMISSION METHOD, AND DATA RETRANSMISSION CONTROL METHOD**

(30) Priority: 16.03.2015 JP 2015052199
(71) Applicant: FUJITSU LIMITED, Kawasaki-shi, Kanagawa 211-8588 (JP)
(72) Inventor: SAKURAI, Katsumi, Kanagawa, 211-8588 (JP); TAKAHASHI, Yuji, Kanagawa, 211-8588 (JP); HIGASHINAKAGAWA, Takashi, Kanagawa, 211-8588 (JP); IWAO, Tadashige, Kanagawa, 211-8588 (JP); KAWAIDA, Yasuyuki, Kanagawa, 211-8588 (JP)
(74) Representative: Hoffmann Eitle

(57) **Abstract**

A communication system includes a first communication apparatus that transmits a transmission notice of data and thereafter transmits the data, and a second communication apparatus that transmits a negative acknowledgement signal to the first communication apparatus when receiving the transmission notice and thereafter failing to detect data transmission corresponding to the transmission notice, wherein the first communication apparatus performs a retransmission process of the data when receiving the negative acknowledgement signal.

## Description

### FIELD

The present disclosure relates to a communication system, a communication apparatus, a data retransmission method, and a data retransmission control method.

### BACKGROUND

There is a communication system in which a node on a transmission side (referred to as a "transmission node") and a node on a reception side (referred to as a "reception node") perform wireless communication with each other. In the wireless communication, a so-called hidden terminal may cause a collision between wireless frames which prevents the wireless frames from reaching the reception node. In addition, some wireless environments between a transmission node and a reception node make wireless quality unstable, which may cause data contained in a wireless frame that reaches the reception node to have an error. When the reception node fails to correct the error in data, the data is discarded. The risk of collisions increases as the length of wireless frames is increased. Meanwhile, for higher throughputs, there is a demand for transmission of wireless frames having a frame length as long as possible from a transmission node.

In existing wireless networks, a retransmission process using a positive acknowledgement (ACKnowledgement: ACK) is performed as a countermeasure against data not reaching a reception node or discarding data. When data is properly received, the reception node transmits to a transmission node an ACK that represents the reception of the data, as a response. The transmission node confirms that the data has reached the reception node, by receiving the ACK. When data does not reach a reception node, or when the reception of ACK fails in a predetermined time period, a transmission node is unable to check for data reaching the reception node and thus retransmits the data.

For further information, see Japanese Laid-Open Patent Publication No. 2009-44581

For example, there are cases where a plurality of nodes are wirelessly connected in a mesh-shape, and data is transmitted through a plurality of relay nodes from a transmission node to a reception node. In this case, a time taken for a frame to reach the reception node may vary, making it difficult to estimate a time from the transmission of the data up to the reception of ACK, by the transmission node.

For this reason, in the transmission node, a time period from the transmission of data up to the retransmission of the data (a timeout count for ACK waiting for reception) is set to be longer. In this case, retransmission occurs after the lapse of the long timeout count, which significantly reduces transmission speed.

The present invention has an objective to provide a technique by which a transmission node can retransmit data in response to the reception of a negative acknowledgement from a reception node, even when a reception node fails to detect data transmitted by the transmission node.

### SUMMARY

One of aspects is a communication system. The communication system includes a first communication apparatus that transmits a transmission notice of data and thereafter transmits the data, and a second communication apparatus that transmits a negative acknowledgement signal to the first communication apparatus when receiving the transmission notice and thereafter failing to detect data transmission corresponding to the transmission notice, wherein the first communication apparatus performs a retransmission process of the data when receiving the negative acknowledgement signal.

As one aspect, it is possible for a transmission node to retransmit data in response to the reception of a negative acknowledgement from a reception node, even when a reception node fails to detect data transmitted by the transmission node.

### BRIEF DESCRIPTION OF THE DRAWINGS

Fig. 1 is a diagram illustrating a configuration example of a communication system according to an embodiment;
Fig. 2 is a sequence diagram illustrating a related art of the embodiment;
Fig. 3 is a sequence diagram illustrating an example of a data retransmission method according to the embodiment;
Fig. 4 is an illustrative diagram of frames used in the embodiment;
Fig. 5 illustrates a configuration example of a node (communication apparatus) that is available as a wireless node;
Fig. 6 is a flow chart illustrating a processing performed by an MCU in a transmission node; and
Fig. 7 is a flow chart illustrating an example of processing performed by the MCU in a reception node.

### DETAILED DESCRIPTION OF EMBODIMENT

An Hereinafter, an embodiment will be described with reference to accompanying drawings. The configurations of the embodiment are merely an example, and the present invention is not limited to the configurations of the embodiment.

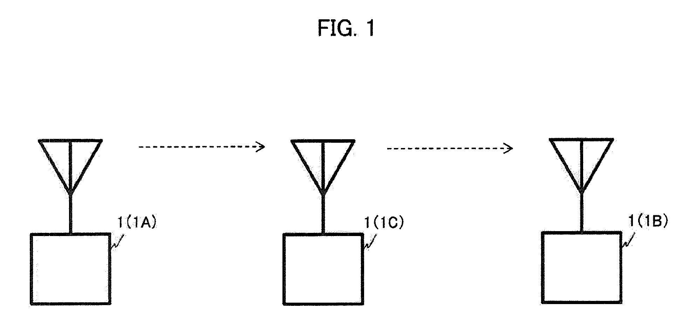

Fig. 1 is a diagram illustrating a configuration example of a communication system according to an embodiment. In Fig. 1, a plurality of wireless nodes 1 are illustrated. The plurality of wireless nodes 1 are connected to one another in an appropriate network topology such as a mesh, torus, and star. There is no limitation on the kind of the network topology. In Fig. 1, three wireless nodes 1 (wireless nodes 1A, 1B, and 1C) of the plurality of wireless nodes 1 are illustrated.

The wireless node 1A operates as a transmission node, wirelessly transmitting a frame containing data (data frame) toward the wireless node 1B. The wireless node 1C transfers the data frame that is received from the wireless node 1A to the wireless node 1B. The wireless node 1B operates as a reception node, receiving the data frame from the wireless node 1C. In such a manner, the wireless node 1B can receive data from the wireless node 1A.

Note that, in the following description, the wireless node 1A is expressed as a "transmission node 1A", the wireless node 1B is expressed as a "reception node 1B", and the wireless node 1C is expressed as a "relay node 1C". The wireless nodes 1A to 1C are expressed as wireless nodes 1 when they are treated the same.

Note that the embodiment describes a wireless network that is formed by the wireless nodes 1. However, the network is not limited to the wireless network. That is, the network may be a wired network in which the transmission node 1A and the reception node 1B communicate with each other in a wired manner. In other words, the communication system may be a wireless communication system or a wired communication system. The wireless node 1 is an example of a "communication apparatus". The transmission node 1A is an example of a "first communication apparatus", and the reception node 1B is an example of a "second communication apparatus".

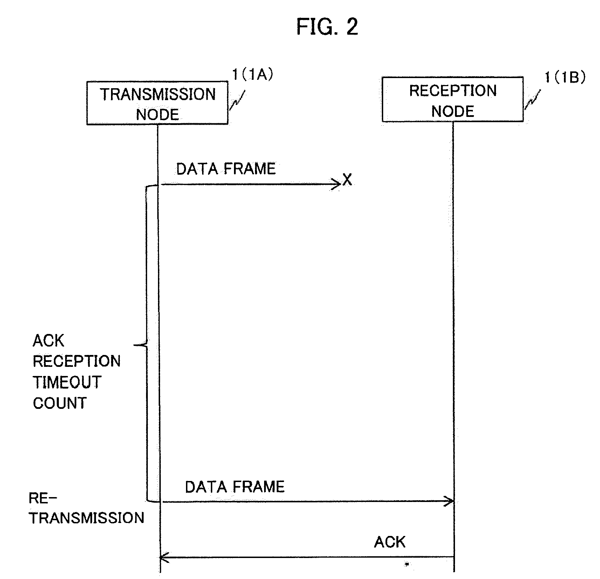

Fig. 2 is a sequence diagram illustrating a related art of the embodiment. In Fig. 2, the network, such as the relay node 1C, between the transmission node 1A and the reception node 1B is not illustrated.

The transmission node 1A transmits a frame (data frame) containing data to the reception node 1B and starts counting down an ACK reception waiting timer from the reception node 1B. Assume the case where the data frame is lost due to a collision or the like and does not reach the reception node 1B. In this case, the reception node 1B is unable to detect data transmission from the transmission node 1A.

Moreover, the transmission node 1A is unable to receive ACK from the reception node 1B by the expiration (timeout) of the reception waiting timer. As a result, the transmission node 1A retransmits the data frame in response to the timeout. When the data frame is received by the reception node 1B, the reception node 1B transmits ACK that indicates the reception of the data to the transmission node 1A. The transmission node 1A receives the ACK and can recognize that the data has reached the transmission node 1A.

In the above procedure, a time length from the transmission of data up to the retransmission of the data depends on the timeout count. A long timeout count causes a long time until the occurrence of the retransmission of the data, which reduces the transmission speed of data.

In the embodiment, in view of the above problem, a method will be described that enables the transmission node 1A to retransmit data in response to the reception of negative acknowledgement (Negative ACKnowledgement: NACK) from the reception node 1B even when the reception node 1B fails to detect data transmission from the transmission node 1A. The NACK is an example of a "negative acknowledgement signal".

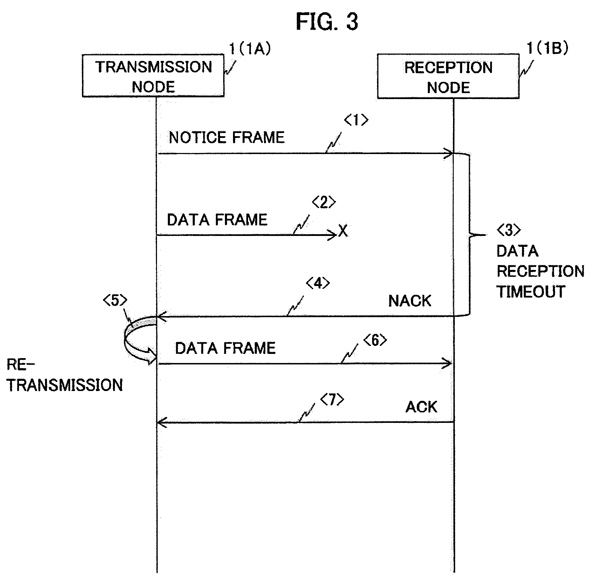

Fig. 3 is a sequence diagram illustrating an example of a data retransmission method according to the embodiment. In Fig. 3, when the transmission node 1A is to transmit data to the reception node 1B, the transmission node 1A transmits a notice frame prior to the data transmission (Fig. 3<1>). The notice frame is a frame for giving a notice of the transmission of a data frame. Subsequently, the transmission node 1A transmits the data frame containing the data (Fig. 3<2>). The notice frame is an example of a "data transmission notice".

Meanwhile, upon receiving the notice frame, the reception node 1B starts counting down a data-frame reception waiting timer that follows the notice frame (Fig. 3<3>). A time length to be counted down using the data-frame reception waiting timer can be set as appropriate.

As illustrated in Fig. 3, when the data frame is lost, the data-frame reception waiting timer expires in a state that the data frame is not received by the reception node 1B (the data transmission from the transmission node 1A is not detected).

In this case, the reception node 1B generates a negative acknowledgement (NACK) and transmits the negative acknowledgement to the transmission node 1A (Fig. 3<4>). Upon receiving the NACK, the transmission node 1A performs a retransmission process of the data (Fig. 3<5>), retransmitting the data frame to the reception node 1B (Fig. 3<6>). When the data frame reaches the reception node 1B, and the reception node 1B properly receives the data, the reception node 1B transmits an ACK to the transmission node 1A (Fig. 3<7>). The ACK being received allows the transmission node 1A to find out that the data have reached the reception node 1B.

As seen from the above, according to the embodiment, even when a data frame does not reach the reception node 1B, and data transmission from the transmission node 1A fails to be detected by the reception node 1B, the transmission node 1A can retransmit the data frame in response to the reception of a NACK.

A time period from the reception of the notice frame up to the reception of the data frame by the reception node 1B is short and easy to estimate as compared with a time period from the transmission of the data frame up to the reception of an ACK frame by the transmission node 1A. For this reason, it is possible to shorten the time period up to the retransmission as compared with the related art, which in turn enables the reduction in degradation of speed performance (the degree of a decline in the amount of transmitted data per unit time) when the retransmission occurs. Note that a NACK may be transmitted also when proper data fails to be received from a received data frame.

In the embodiment, whether to transmit a notice frame or to transmit a data frame without transmitting a notice frame can be controlled (determined) in accordance with the size of data (the amount of data) to be transmitted. If a notice frame is always transmitted, the transmission timing of a data frame is delayed as much as a time period taken to perform a transmission process on a notice frame, which may cause a decline in transmission speed. In other words, where it is considered that the probability of losing a data frame is low, a decline in transmission speed (the amount of transmitted data per unit time) is avoided by avoiding transmitting a notice frame to bring forward a transmission timing of a data frame.

For example, a notice frame can be adapted to be transmitted when the size of data (the amount of data) in a data frame exceeds a predetermined threshold value. This is because it is considered that the risk of collision increases as the size (the frame length) of a data frame is increased, which in turn increases the risk that a data frame does not reach the reception node 1B.

In addition, the size (the frame length) of a notice frame can be smaller (shorter) than the size (the frame length) of a data frame. For example, a notice frame can have a size smaller than the above threshold value. However, the size of a notice frame may be set larger than the threshold value, while being set smaller than the size of a data frame. The threshold value may be a threshold value for the amount of data to be transmitted that is carried in a frame or may be a threshold value for the length of the frame.

In such a manner, by making the size of a notice frame smaller than the size of a data frame, it is possible to increase the possibility that a notice frame reaches the reception node 1B as compared with the case of transmitting a data frame to the reception node 1B.

Note that, also in the embodiment, counting of the ACK reception waiting timer may be started in response to the transmission of a data frame. This configuration allows the transmission node 1A to have a retransmission opportunity even when both a notice frame and a data frame do not reach the reception node 1B.

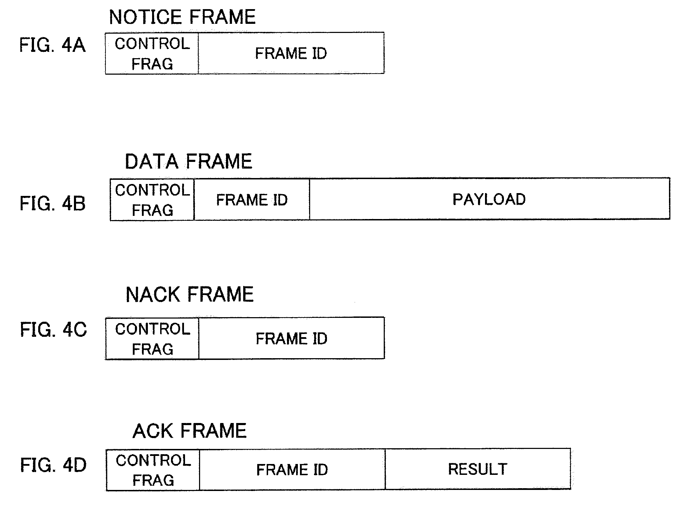

Fig. 4 is an illustrative diagram of frames used in the embodiment, where Fig. 4 (A) illustrates an example of the format of a notice frame. Fig. 4(B) illustrates an example of the format of a data frame, and Fig. 4(C) illustrates an example of the format of a NACK frame. Fig. 4 (D) illustrates an example of the format of an ACK frame.

A notice frame contains a control flag and a frame ID (the identifier of the frame). A data frame contains a control flag and a frame ID, as well as a payload added thereto. In the payload, data to be transmitted to the reception node 1B is stored. As seen from the above, since a notice frame contains no payload, the size (the frame length) of the notice frame is smaller than the size (the frame length) of a data frame. In other words, since a notice frame contains no payload, it can be considered that the amount of data of the notice frame (transmission notice) is smaller than the threshold value for the amount of data that is used to determine whether or not to transmit a notice frame.

Also a NACK frame contains a control flag and a frame ID, as with a notice frame. An ACK frame contains a control flag, a frame ID, and a result (the result of receiving a data frame) . The result may include the size of a free buffer (the size of a window) in the reception node 1B, or the fact that part of data (segment) can be received but the remaining part fails to be received (Selective ACK).

The frame length of a NACK frame can be shorter than the frame length of a data frame or an ACK frame. For this reason, it is possible to increase the possibility of the avoidance of losing a frame in a network (the reception of the frame by the transmission node 1A).

The reception node 1B can determine, for example, whether a frame is a notice frame or a data frame by determining whether or not the frame contains a payload. However, methods other than the above methods can be used as the method of determining whether the frame is a notice frame or a data frame. For example, a control flag may contain a flag that represents whether a frame is a notice frame or a data frame, and whether a frame is a notice frame or a data frame may be determined according to the value of the flag.

In addition, for example, by using the same value as the frame ID of a notice frame and the frame ID of a data frame, or using a value that is associated in advance with a notice frame and a data frame, the reception node 1B is allowed to recognize that the data frame is a data frame following the notice frame. However, the associating the notice frame with the data frame using the frame ID is not a configuration requisite.

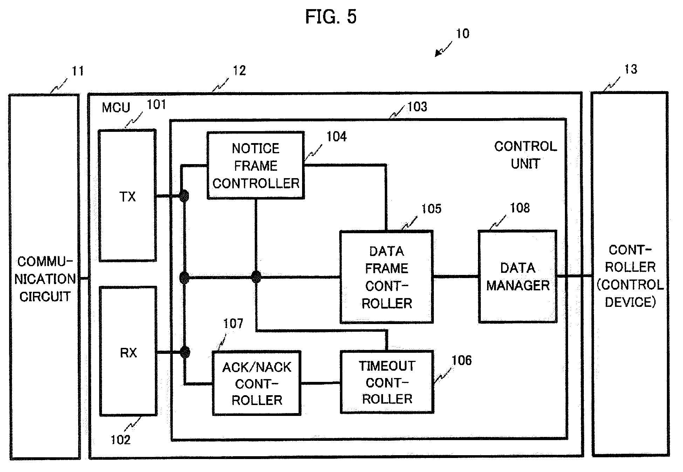

Fig. 5 illustrates a configuration example of a node (communication apparatus) 10 that is available as a wireless node 1. In Fig. 5, the node 10 includes a communication circuit 11, a microcontroller (MCU) 12, and a control device 13. The MCU 12 is an example of a "processor", a "control device", or a "controller".

The MCU 12 includes a processor and a memory, which are however not illustrated. The memory includes a nonvolatile storage medium in which programs and data are stored, and a volatile storage medium that is used as an expansion area for the program, a working area for the processor, a storage area for data, or a buffer area for data. The memory is an example of a "storage device" or a "computer-readable storage medium".

By the processor executing a program, the MCU 12 operates as a device that includes a transmission unit (TX) 101, a reception unit (RX) 102, and a control unit 103, as illustrated in Fig. 5. The control unit 103 includes a notice frame control unit 104, a data frame control unit 105, a timeout control unit 106, an ACK/NACK control unit 107, and a data management unit 108.

The communication circuit 11 includes an antenna, and an RF (Radio Frequency) circuit, which are however not illustrated. The RF circuit modulates a baseband signal received from the transmission unit 101 to convert the baseband signal into a wireless signal and transmits the wireless signal through the antenna. In addition, the RF circuit demodulates a wireless signal received from the antenna to convert the wireless signal into a baseband signal and transmits the baseband signal to the reception unit 102.

The transmission unit 101 performs an encoding and modulating processes on digital data received from the control unit 103, converts the digital data into a baseband signal, and transmits the baseband signal to the communication circuit 11. The reception unit 102 performs demodulating and decoding processes on a baseband signal from the communication circuit 11, converts the baseband signal into digital data, and transmits the digital data to the control unit 103.

The notice frame control unit 104 performs a process relating to transmission and reception of a notice frame. When the node 10 operates as the transmission node 1A, the notice frame control unit 104 generates a notice frame and passes the notice frame to the transmission unit 101. In contrast, when the node 10 operates as the reception node 1B, the notice frame control unit 104 receives a notice frame from the reception unit 102 and notifies the timeout control unit 106 of the reception of the notice frame.

When the node 10 operates as the transmission node 1A, the data frame control unit 105 receives data to be transmitted that is managed in the data management unit 108, generates a data frame containing a payload in which the data is stored, and passes the data frame to the transmission unit 101. In addition, the data frame control unit 105 notifies the timeout control unit 106 of the transmission of a data frame.

When the node 10 operates as the reception node 1B, the data frame control unit 105 receives a data frame from the reception unit 102. In other words, the data frame control unit 105 detects the transmission of data that is transmitted from the transmission node 1A.

The data frame control unit 105 can perform an error check on data contained in a data frame. When the result of the error check is OK, the data frame control unit 105 passes the data to the data management unit 108. At this point, the data frame control unit 105 notifies the timeout control unit 106 of the reception of the data frame to stop the data-frame reception waiting timer.

When the result of the error check is NG, the data frame control unit 105 discards the data. In this case, the data frame control unit 105 notifies the timeout control unit 106 of the reception of the data frame to stop the data-frame reception waiting timer. In addition, in order to transmit a NACK immediately, the data frame control unit 105 provides a notification to the ACK/NACK control unit 107.

When the node 10 operates as the transmission node 1A, the timeout control unit 106 receives the notification from the data frame control unit 105 and starts counting down the reception waiting timer of an ACK. When the ACK reception waiting timer expires (a timeout occurs), the timeout control unit 106 notifies the data frame control unit 105 of the timer expiration. At this point, the data frame control unit 105 performs a retransmission process on the data frame that is buffered.

When the node 10 operates as the reception node 1B, the timeout control unit 106 receives the notification from the notice frame control unit 104 and starts counting down the data-frame reception waiting timer. When the data-frame reception waiting timer expires (a timeout occurs), the timeout control unit 106 notifies the ACK/NACK control unit 107 of the timer expiration. When the result of the error check is NG, the timeout control unit 106 receives the notification from the data frame control unit 105 and stops the reception waiting timer.

In addition, the timeout control unit 106 receives the notification of the reception of a data frame from the data frame control unit 105, and stops the data-frame reception waiting timer. At this point, the timeout control unit 106 instructs the ACK/NACK control unit 107 to transmit an ACK.

When the node 10 operates as the reception node 1B, the ACK/NACK control unit 107 receives the notification of the timeout of the data-frame reception waiting timer from the timeout control unit 106, generates a NACK, and transmits the NACK to the transmission unit 101. In addition, when receiving a notification provided in the case where the data frame control unit 105 determines the error check to be NG, the ACK/NACK control unit 107 generates a NACK and transmits the NACK to the transmission unit 101. The NACK is thereby transmitted to the transmission node 1A through the transmission unit 101 and the communication circuit 11.

In addition, when receiving the instruction from the timeout control unit 106, the ACK/NACK control unit 107 generates an ACK and transmits the ACK to the transmission unit 101. However, the ACK/NACK control unit 107 may generate an ACK when receiving the notification of the data frame reception from the data frame control unit 105.

When the node 10 operates as the transmission node 1A, the ACK/NACK control unit 107 receives the NACK that is received by the reception unit 102. In this case, the ACK/NACK control unit 107 notifies the data frame control unit 105 of the reception of the NACK to promote retransmitting the data.

When receiving the ACK that is received by the reception unit 102, the ACK/NACK control unit 107 notifies the data frame control unit 105 of the reception of the ACK. Note that the operation of the ACK/NACK control unit 107 in the cases where the node 10 operates as the transmission node 1A may be performed by the data frame control unit 105 instead.

The data management unit 108 stores the data received from the data frame control unit 105 in the buffer (memory). Alternatively, the data management unit 108 reads data to be transmitted from the memory and provides the data to the data frame control unit 105.

The control device 13 is formed by, for example, a processor (e.g., a Central Processing Unit (CPU)) and a memory. The control device 13 performs a predetermined process by the CPU executing a program stored in the memory.

For example, the control device 13 performs a predetermined process on data stored in the memory (buffer), in the MCU 12. Alternatively, the control device 13 controls the operation of the MCU 12. For example, the control device 13 performs time setting of the data-frame reception waiting timer or the ACK reception waiting timer, control of transmission timing for data, provision of data to be transmitted, and the like.

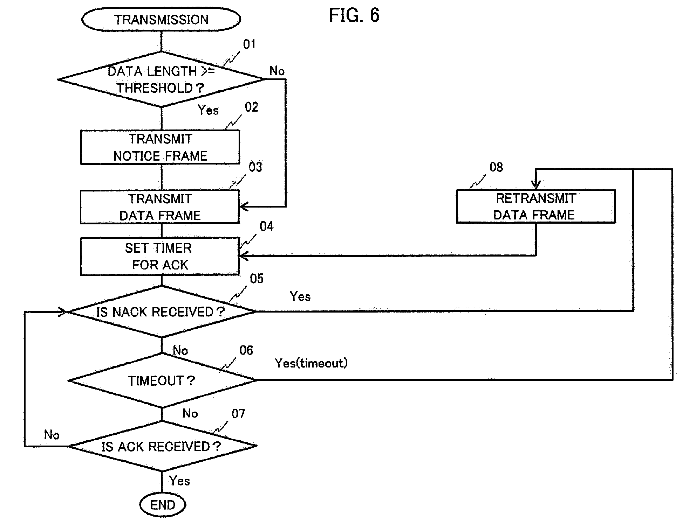

Fig. 6 is a flow chart illustrating a processing performed by the MCU 12 in the transmission node 1A. The processing illustrated in Fig. 6 is started in response to, for example, the provision of data to be transmitted to the data frame control unit 105, in a state that a connection with the reception node 1B is established.

In the process of 01 in Fig. 6, the MCU 12 determines whether or not the length of data to be transmitted (the amount of the data) is equal to or larger than a threshold value (a predetermined value). The threshold value is stored in advance in the memory of the MCU 12. As the threshold value for the amount of data, a non-zero, positive value is prepared. When the data length is less than the threshold value (No in 01), the processing proceeds to 03. In contrast, when the data length is equal to or larger than the threshold value (Yes in 01), the processing proceeds to 02. Note that the process of 01 may be a determining process of whether or not the data length is less than the threshold value.

In the process of 02, a transmission process of a notice frame is performed. That is, the MCU 12 generates a notice frame in response to the determination that the data length is equal to or larger than the threshold value. The notice frame is transmitted to the reception node 1B via the communication circuit 11 (see Fig. 3<1>).

In the process of the next 03, the MCU 12 performs a transmission process on a data frame. That is, the MCU 12 generates a data frame that contains data to be transmitted. The data frame is transmitted to the reception node 1B via the communication circuit 11 (see Fig. 3<2>).

In the process of the next 04, the MCU 12 starts counting down the ACK reception waiting timer, coming into a state of waiting for an ACK.

In the process of the next 05, the MCU 12 determines whether or not a NACK is received. When a NACK is received (Yes in 05), the processing proceeds to 08. In contrast, when no NACK is received (No in 05), the processing proceeds to 06.

In the process of 06, the MCU 12 determines whether or not the ACK reception waiting timer expires (a timeout occurs). When the reception waiting timer expires (Yes in 06), the processing proceeds to 08. In contrast, when the reception waiting timer does not expire (No in 06), the processing proceeds to 07.

In the process of 07, the MCU 12 determines whether or not an ACK is received. When an ACK is received (Yes in 07), the process for the reception of an ACK is performed, and the processing illustrated in Fig. 6 is finished. In contrast, when no ACK is received (No in 07), the processing returns to 05.

When the processing proceeds to 08, the MCU 12 performs the retransmission process on the data frame. This causes the data frame to be retransmitted to the reception node 1B (see Fig. 3<6>). Thereafter, the processing proceeds to 04.

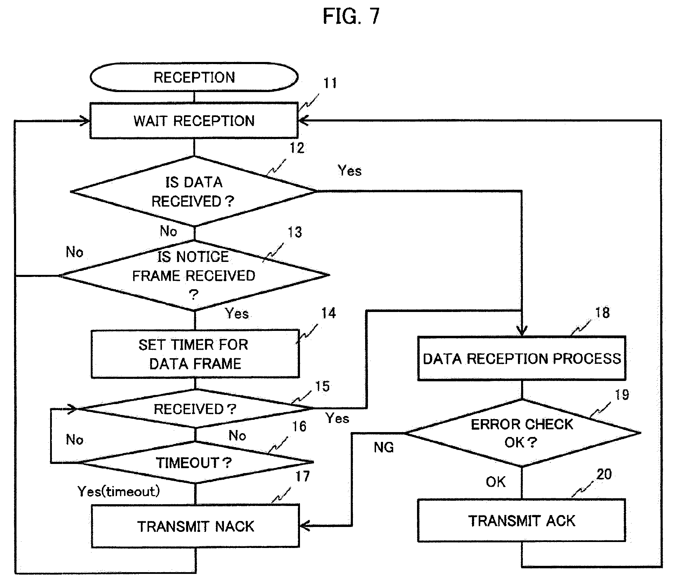

Fig. 7 is a flow chart illustrating an example of processing performed by the MCU 12 in the reception node 1B. The processing in Fig. 7 is started in response to, for example, the establishment of a connection with the transmission node 1A. In the process of the first 11, the reception node 1B comes into a state of waiting for the reception of a frame from the transmission node 1A. When a frame from the transmission node 1A is received, the processing proceeds to 12.

In the process of 12, the MCU 12 determines whether or not the received frame is a data frame. When the received frame is a data frame (Yes in 12), the processing proceeds to 18. In contrast, when the received frame is not a data frame (No in 12), the processing proceeds to 13.

In the process of 13, the MCU 12 determines whether or not the received frame is a notice frame. When the received frame is a notice frame (Yes in 13), the processing proceeds to 14. In contrast, when the received frame is not a notice frame (No in 13), the processing returns to 11, where the MCU 12 comes into a state of waiting for the reception of a frame.

In the process of 14, the MCU 12 starts counting down the data-frame reception waiting timer. In the process of the next 15, the MCU 12 determines whether or not a data frame is received. When no data frame is received (No in 15), the processing proceeds to 16. When a data frame is received (Yes in 15), the processing proceeds to 18.

In the process of 16, the MCU 12 determines whether or not the reception waiting timer expires (a timeout occurs). When the reception waiting timer expires (a timeout occurs) (Yes in 16), the processing proceeds to 17. When the reception waiting timer does not expire (a timeout does not occur) (No in 16), the processing returns to 15.

When the processing proceeds to 17, the MCU 12 generates a NACK and performs a process of transmitting the NACK to the transmission node 1A (see Fig. 3<4>). This promotes retransmitting the data frame to the transmission node 1A.

When the processing proceeds to 18, the MCU 12 performs a receiving process of the data frame. The MCU 12 performs, in the receiving process, an error check on data contained in the data frame to determine whether the check result is OK or NG (19).

When the result of the error check is OK (OK in 19), the MCU 12 performs the transmission process of an ACK, and the ACK is transmitted to the transmission node 1A (see Fig. 3<7>). Thereafter, the processing returns to 11. In contrast, when the result of the error check is NG, the processing proceeds to 17, where a NACK is transmitted to the transmission node 1A. The error check is, for example, CRC (Cyclic Redundancy Check) check. However, the error check may be a parity check, or a check using a checksum.

The configurations of the embodiment described above can be combined as appropriate.

## Claims

1. A communication system, comprising:
a first communication apparatus configured to transmit a transmission notice of data and thereafter transmits the data; and
a second communication apparatus configured to transmit a negative acknowledgement signal to the first communication apparatus when receiving the transmission notice and thereafter failing to detect data transmission corresponding to the transmission notice,
wherein the first communication apparatus performs a retransmission process of the data when receiving the negative acknowledgement signal.

2. The communication system according to claim 1, wherein the transmission notice is transmitted when an amount of the data exceeds a threshold value.

3. The communication system according to claim 2, wherein an amount of data of the transmission notice is smaller than the threshold value.

4. The communication system according to any one of claims 1 to 3, wherein the first communication apparatus performs control of whether to transmit transmission data after transmitting the transmission notice, or to transmit the data to be transmitted without transmitting the transmission notice, in accordance with an amount of transmission data.

5. A communication apparatus, comprising:
a controller configured to perform a process including:
transmitting a transmission notice of data to a communication counterpart apparatus and thereafter transmitting the data; and
retransmitting the data in response to reception of a negative acknowledgement signal that is transmitted when the communication counterpart apparatus fails to detect data transmission corresponding to the transmission notice after receiving the transmission notice.

6. A communication apparatus, comprising:
a controller configured to perform a process including:
receiving a transmission notice of data from a communication counterpart apparatus;
transmitting a negative acknowledgement signal when failing to detect data transmission from the communication counterpart apparatus after receiving the transmission notice; and
receiving the data that the communication counterpart apparatus retransmits in response to reception of the negative acknowledgement signal.

7. A method of retransmitting data for a communication apparatus, the method comprising:
transmitting, by the communication apparatus, a transmission notice of data to a communication counterpart apparatus and thereafter transmitting the data; and
retransmitting the data in response to reception of a negative acknowledgement signal that is transmitted when the communication counterpart apparatus fails to detect data transmission corresponding to the transmission notice after receiving the transmission notice.

8. A method of controlling data retransmission for a communication apparatus, the method comprising:
receiving, by the communication apparatus, a transmission notice of data from a communication counterpart apparatus;
transmitting a negative acknowledgement signal when failing to detect data transmission from the communication counterpart apparatus after receiving the transmission notice; and
receiving the data that the communication counterpart apparatus retransmits in response to reception of the negative acknowledgement signal.

9. A program that causes a computer of a communication apparatus to perform a process including:
transmitting a transmission notice of data to a communication counterpart apparatus and thereafter transmitting the data; and
retransmitting the data in response to reception of a negative acknowledgement signal that is transmitted when the communication counterpart apparatus fails to detect data transmission corresponding to the transmission notice after receiving the transmission notice.

10. A program that causes a computer of a communication apparatus to perform a process including:
receiving a transmission notice of data from a communication counterpart apparatus;
transmitting a negative acknowledgement signal when failing to detect data transmission from the communication counterpart apparatus after receiving the transmission notice; and
receiving the data that the communication counterpart apparatus retransmits in response to reception of the negative acknowledgement signal.
